# EUROPÄISCHE PATENTANMELDUNG

(11) **EP 0 738 467 A1**
(43) Veröffentlichungstag der Anmeldung: **23.10.1996**
(21) Anmeldenummer: 96201040.1
(22) Anmeldetag: 18.04.1996
(51) Int. Cl.: A01K 5/02

(54) **Futtervorrichtung**

(30) Priorität: 18.04.1995 NL 1000166
(71) Anmelder: AGMAT B.V., NL-5469 EM Erp (NL)
(72) Erfinder: Van Kaathoven, Hendricus Theodorus, 5469 NX Boerdonk (NL)
(74) Vertreter: Smulders, Theodorus A.H.J., Ir.

(57) **Zusammenfassung**

Beschrieben wird eine Vorrichtung zum Abgeben von Futter an Tiere, umfassend eine Anzahl Futtertröge (101) und zwei Mischbehälter (20; 30). Für jeden Mischbehälter (20; 30) ist ein einzelnes Futterverteilersystem (200, 211, 218; 300, 311, 318) vorgesehen, an das die Futtertröge (101) angeschlossen sind. Jedes einzelne Futterverteilersystem (200, 211, 218; 300, 311, 318) weist eine Verteilerschleifenleitung (211; 311) mit einzelnen Abzweigungen oder Trogfülleitungen (218; 318) zu jedem Futtertrog (101) auf. In jede Trogfülleitung (218; 318) ist jeweils ein Ventil (219; 319) aufgenommen.
In dieser Weise kann jeder Trog (101) mit Futter (A; B) aus jedem der Mischbehälter (20; 30) gefüllt werden, wobei die Zusammensetzung des Futters in jedem Trog durch die Wahl eines geeigneten Mischverhältnisses einzeln eingestellt werden kann.

## Beschreibung

Die Erfindung bezieht sich auf eine Futtervorrichtung wie beschrieben im Oberbegriff des Anspruchs 1.

Mehr insbesondere bezieht die Erfindung sich auf die Abgabe von Breifutter, d.h. Futter in Form einer in bestimmtem Maße flüssigen, breiartigen Substanz, an Schweine in größerem Umfang, wie angewendet in Bauerubetrieben, in denen das Füttern der Schweine mit der Hand zuviel Zeit kosten würde. Die Erfindung wird aus diesem Grunde nachfolgend spezifisch für diese Anwendung erläutert. Es wird jedoch ausdrücklich darauf hingewiesen, daß die Erfindung nicht auf die beschriebene Anwendung beschränkt ist: Es ist auch möglich, andere Tiere als Schweine mit der erfindungsgemäßen Vorrichtung zu füttern, und es ist sogar möglich, daß die Erfindung auf Trockenfuttersysteme angewendet wird, wobei das Futter in Pulver- oder Brockenform abgegeben wird, wobei das Fördersystem angepaßt wird.

Im allgemeinen sind die Schweine in Boxen untergebracht, wobei in jeder Box ein oder einige Schweine anwesend sind und wobei in einem Betriebsraum (Stall) mehrere Boxen vorgesehen sind, in der Regel in langen Reihen nebeneinander angeordnet. Jede Box ist mit einem Futtertrog versehen, in den an bestimmten Zeitpunkten eine bestimmte Futtermenge (Portion) eingebracht wird, die dann anschließend von den "Bewohnern" dieser Box aufgefressen wird.

Das Futter besteht im allgemeinen aus mehreren Bestandteilen, die in großen Mengen je Bestandteil in einem Vorratsbehälter (Silo) gespeichert werden. Das Fertigmachen des Futters erfolgt in einem Mischbehälter, in dem die Futterbestandteile in einem vorgegebenen Mischverhältnis eingeführt und gemischt werden.

Aus dem Mischbehälter wird das Futter über eine Futterförderleitung zu den Trögen gefördert. Jeder Trog ist über einen Ablaßhahn an diese Futterverteilerleitung angeschlossen, so daß aus dieser Leitung eine Futterportion in den Trog eingebracht werden kann.

Dieses bekannte System funktioniert zur vollen Zufriedenheit in solchen Situationen, in denen alle Tiere ein gleiches Futterbedürfnis haben. Im Rahmen der vorliegenden Erfindung wird mit dem Ausdruck "Futterbedürfnis" das Bedürfnis nach einer bestimmten Zusammensetzung des Futters gemeint.

In der Praxis kommt eine derartige Situation jedoch selten vor: in der Regel sind in **einem** Betrieb Tiere verschiedener Tierkategorien anwesend. Im Rahmen der vorliegenden Erfindung wird mit dem Ausdruck "Tierkategorie" eine Gruppe von Tieren mit demselben Futterbedürfnis gemeint. Tiere unterschiedlichen Alters müssen mit verschiedenen Futterzusammensetzungen gefüttert werden. Aber auch Tiere unterschiedlicher Rasse (Schweine, Kühe) müssen mit verschiedenen Futterzusammensetzungen gefüttert werden.

Bisher wird **eine** einzige Futterförderleitung benutzt. Dabei wird zuerst Futter mit einer bestimmten Zusammensetzung durch die Leitung gepumpt, und vom Bedienungspersonal werden nacheinander die Ablaßhähne der Tröge solcher Tiere geöffnet, die mit dieser bestimmten Zusammensetzung gefüttert werden müssen. Nach einer in dieser Weise gemachten Runde durch den Stall schließt das Personal diese Futterförderleitung an einen anderen Mischbehälter an, um Futter mit einer anderen Zusammensetzung durch die Leitung zu pumpen. Das Bedienungspersonal macht dann wieder eine Runde durch den Stall, um nacheinander die Ablaßhähne der Tröge solcher Tiere zu öffnen, die mit dieser anderen Zusammensetzung gefüttert werden müssen. Gegebenenfalls wird dies mit einem dritten, vierten usw. Mischbehälter zum Abgeben einer dritten, vierten usw. Futterzusammensetzung wiederholt.

An erster Stelle ist das Füttern der Tiere in dieser Weise eine komplizierte und zeitraubende Tätigkeit. In großen Betrieben ist es sogar so, daß nach der letzten Futterrunde die erste Tiergruppe wieder an der Reihe ist, so daß das betreffende Personal mit dem Füttern buchstäblich voll ausgelastet ist.

Es ist somit eine erste Aufgabe der vorliegenden Erfindung, ein Futtersystem zu schaffen, das einfach zu betätigen ist und vorzugsweise selbsttätig arbeiten kann.

An zweiter Stelle ist das bekannte Systemn wenig flexibel. Für jede Futterzusammensetzung ist ein einzelner Mischbehälter benötigt, und umgekehrt, wenn nur zwei oder drei Mischbehälter vorhanden sind, kann man die Tiere nur mit zwei bzw. drei verschiedenen Futterzusammensetzungen füttern. Wenn man mehrere Tierkategorien füttern will, muß man also entweder in einen zusätzlichen Mischbehälter investieren oder die Tiere auf Basis einer Kornpromißzusammensetzung füttern.

Weiter ist es so, daß man, wenn einmal ein bestimmter Mischbehälter angeschlossen ist, nur die Tiere füttern kann, die die bestimmte Futterzusammensetzung erhalten müssen. Alle anderen Tiere müssen warten.

Es ist somit eine zweite Aufgabe der vorliegenden Erfindung, ein Futtersystem zu schaffen, das eine größere Flexibilität bietet. Mehr insbesondere bezweckt die vorliegende Erfindung, ein Futtersystem zu schaffen, mit dem man die Reihenfolge der zu fütternden Tiere beliebig wählen kann und mit dem die Anzahl der Wahlmöglichkeiten für die Futterzusammensetzungen beliebig vergrößert werden kann.

An dritter Stelle ist bei dem bekannten System, nach dem Umschalten von einem ersten Mischbehälter auf einen zweiten Mischbehälter, in der Leitung noch das Futter mit der ersten Zusammensetzung vorhanden. Dieser Rest des ersten Futters muß zuerst aus der Leitung entfernt werden, bevor die zweite Tiergruppe gefüttert werden kann. Dieses Entfernen erfolgt durch Verdrängen des ersten Futters durch das zweite Futter. Das dann aus der Leitung kommende Futter kann jedoch auch nicht für die erste Tiergruppe verwendet werden, weil beim Verdrängen ein Mischen des ersten Futters mit dem zweiten Futter auftritt.

Folglich kann die Vorrichtung während einer bestimmten Zeit nicht zum Füttern verwendet werden, während das während dieser Zeit aus der Leitung kommende Futter als Verlust zu betrachten ist.

Es ist somit eine dritte Aufgabe der vorliegenden Erfindung, ein Futtersystem zu schaffen, in dem der Futterverlust verringert und vorzugsweise ganz beseitigt ist.

Gemäß einem wichtigen Aspekt der vorliegenden Erfindung sind die Träge an zwei oder mehrere parallele Futterförderleitungen angeschlossen, wobei jede Futterförderleitung an einen einzelnen Mischbehälter angeschlossen ist. Während des Füllens eines Troges wird aus jeder Leitung eine gewünschte Menge abgelassen, so daß die Zusammensetzung des Futters in dem Trog beliebig auf Basis von unterschiedlichen, aus den einzelnen Futterförderleitungen abgelassenen Mengen variiert werden kann.

Diese und andere Aspekte, Merkmale und Vorteile der vorliegenden Erfindung werden durch die nachfolgende Beschreibung einer bevorzugten Ausführungsform einer erfindungsgemäßen Futtervorrichtung verdeutlicht, unter Hinweis auf die Zeichnung. Es zeigen
Fig.1 ein Blockschaltbild einer Futtervorrichtung; und
Fig.2 ein Blockschaltbild eines Steuersystems für die Futtervorrichtung von Fig. 1.

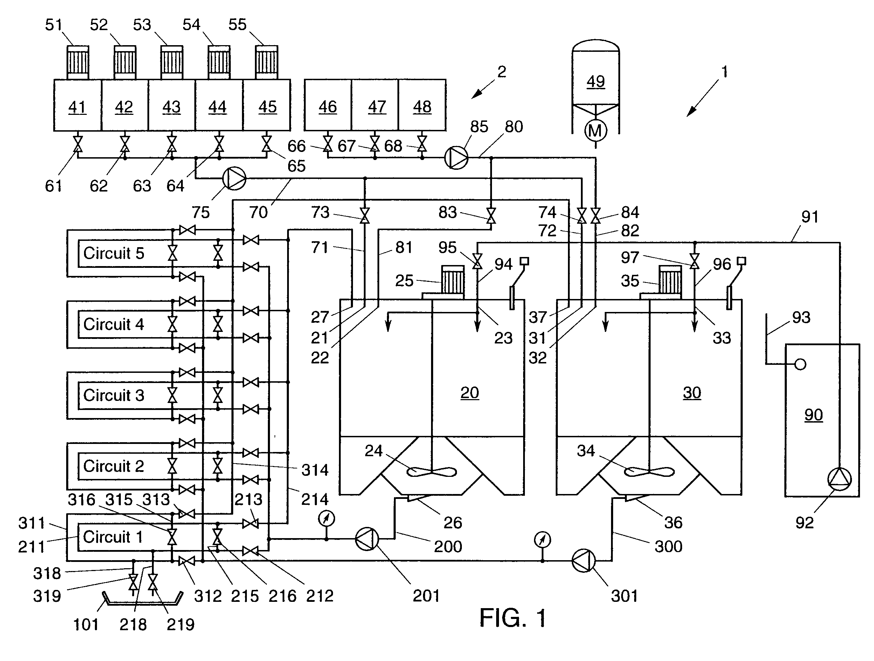

In Fig. 1 ist eine Futtervorrichtung gemäß der vorliegenden Erfindung im allgemeinen mit der Bezugsziffer 1 bezeichnet. In dieser Ausführungsform umfaßt die Futtervorrichtung 1 zwei Mischbehälter 20 und 30 und acht Vorratsbehälter oder Silos 41-48.

Jedes Silo 41-48 ist zum Aufnehmen eines einzelnen Futterbestandteils bestimmt. Beispiele von einzelnen Futterbestandteilen sind Bierhefe, Käsewasser, Weizenstärke. Bierhefe und Käsewasser sind Beispiele von "nassen", d.h. mehr oder weniger flüssigen Futterbestandteilen. Wenn eine bestimmte Futterkomponente die Neigung aufweist, sich im Vorratstank anzusetzen, muß diese Futterkomponente regelmäßig gerührt werden, wozu der Tank mit einem Rührwerk versehen sein kann, das von einem Motor 51-55 angetrieben wird, wie in Fig. 1 für die Silos 41-45 gezeigt.

Die Silos 41-45 sind über Hähne 61-65 an eine erste Fülleitung 70 angeschlossen, in die eine erste Füllpumpe 75 aufgenommen ist. Über eine erste Abzweigung 71, in die ein Hahn 73 aufgemommen ist, ist die erste Fülleitung 70 an einen ersten Einlaß 21 des ersten Mischbehälters 20 angeschlossen, und über eine zweite Abzweigung 72, in die ein Hahn 74 aufgenommen ist, ist die erste Fülleitung 70 an einen ersten Einlaß 31 des zweiten Mischbehälters 30 angeschlossen.

Die zum Pumpen der Futterkomponenten benötigte Leistung der Füllpumpe 75 ist u.a. auf die Viskosität der Futterkomponenten bezogen. Für den Fall, daß Futterkomponenten mit voneinander stark verschiedenen Viskositäten verwendet werden, könnte für Futterkomponenten mit einer niedrigen Viskosität ein einzelner Füllkreis vorgesehen werden, wie in Fig. 1 für die Silos 46-48 gezeigt. Diese sind über Hähne 66-68 an eine zweite Fülleitung 80 angeschlossen, in die eine zweite Füllpumpe 85 mit einer geringeren Leistung als die erste Füllpumpe 75 aufgenommen ist. Über eine erste Abzweigung 81, in die ein Hahn 83 aufgenommen ist, ist die zweite Fülleitung 80 an einen zweiten Einlaß 22 des ersten Mischbehälters 20 angeschlossen, und über eine zweite Abzweigung 82, in die ein Hahn 84 aufgenommen ist, ist die zweite Fülleitung 80 an einen zweiten Einlaß 32 des zweiten Mischbehälters 30 angeschlossen.

Die genannten Silos, Pumpen, Leitungen und Hähne können in herkömmlicher Weise ausgebildet sein. Da diese Ausbildungen nicht zum Gegenstand der vorliegenden Erfindung gehören und der Fachmann sie zum richtigen Verstehen der vorliegenden Erfindung nicht zu kennen braucht, werden diese nicht näher beschrieben. Es genügt, zu bemerken, daß in dieser Weise ein im allgemeinen mit der Bezugsziffer 2 bezeichneter Füllkreis definiert wird, mit dem die Mischbehälter 20 und 30 gefüllt werden können. Die Zusammensetzung des Futters in jedem Mischbehälter 20, 30 kann durch das Betätigen der richtigen Hähne und Motoren während der richtigen Zeit nach Wahl eingestellt werden.

Es ist auch möglich, feste Futterkomponenten in Pulver- oder Körnerform zu verwenden, z.B. Weizenstärke. Dazu ist in Fig. 1 ein Festfuttersilo 49 gezeigt. Durch Schnecken kann das Festfutter zu einem Mischbehälter gefördert werden, was der Einfachheit halber in Fig. 1 nicht einzeln erläutert ist.

Die Futtervorrichtung 1 umfaßt weiter einen Wassertank 90, der mit einer Wasserfülleitung 91 versehen ist, in die eine zugeordnete Wasserfüllpumpe 92 aufgenommen ist. Über eine Zuführleitung 93 ist der wassertank 90 an ein Wasserleitungsnetz eines Wasserlieferbetriebes angescblossen. Über eine erste Abzweigung 94, in die ein Hahn 95 aufgenommen ist, ist die Wasserfülleitung 91 an einen dritten Einlaß 23 des ersten Mischbehälters 20 angeschlossen, und über eine zweite Abzweigung 96, in die ein Hahn 97 aufgenommen ist, ist die Wasserfülleitung 91 an einen dritten Einlaß 33 des zweiten Mischbehälters 30 angeschlossen. In dieser Weise ist es möglich, Wasser zu den Mischbehältern zu fördern und die Wassermenge des Futters in den Mischbehältern zum Einstellen einer geeigneten Viskosität einzustellen.

In Fig. 1 ist schematisch gezeigt, daß jeder Mischbehälter 20, 30 mit Mischorganen 24, 34 versehen ist, die von einem Mischmotor 25, 35 angetrieben werden, mit dem das in die Mischbehälter eingebrachte Gemisch aus Futterbestandteilen und Wasser gut durcheinandergemischt werden kann. Da die Ausbildung dieser Mischorgane 24, 34 nicht zum Gegenstand der vorliegenden Erfindung gehört und der Fachmann sie zum richtigen Verstehen der vorliegenden Erfindung nicht zu kennen braucht, wird diese nicht näher beschrieben.

Der erste Mischbehälter 20 hat einen Auslaß 26, an den eine erste Hauptverteilerleitung 200 angeschlossen ist, in die eine Pumpe 201 aufgenommen ist. Diese Pumpe 201 ist vorzugsweise eine frequenzgesteuerte Verdrängerpumpe.

An die erste Hauptverteilerleitung 200 ist eine erste Verteilerschleifenleitung 211 über ein Einlaßventil 212 angeschlossen. Die erste Verteilerschleifenleitung 211 ist weiter über ein Auslaßventil 213 an eine Rückleitung 214 angeschlossen, die in einen dritten Einlaß 27 des ersten Mischbehälters 20 mündet, um das nicht-verwendete Futter wieder aufzufangen.

Parallel zu der ersten Verteilerschleifenleitung 211, unmittelbar hinter dem Einlaßventil 212 und unmittelbar vor dem Auslaßventil 213, ist im gezeigten Beispiel eine Umlaufleitung 215 geschaltet, in die ein Ventil 216 aufgenommen ist, wodurch der Druck in der Verteilerschleifenleitung 211 besser beherrschbar ist, um zu vermeiden, daß das Futter in dieser Leitung zu sehr komprimiert wird.

Die erste Verteilerschleifenleitung 211 erstreckt sich durch einen der Einfachheit halber nicht gezeigten Stallraum mit einer in diesem vorgesehenen Reihe von ebenfalls der Einfachheit halber nicht gezeigten Boxen. In jeder Box ist ein Trog 101 vorgesehen, von denen in Fig. 1 der Einfachheit halber nur einer gezeigt ist. Für jeden Trog 101 ist die erste Verteilerschleifenleitung 211 mit einer Trogfülleitung 218 versehen, in die ein Trogventil 219 aufgenommen ist. Dieses Trogventil 219 kann ein Dosierventil sein.

Im Schaltbild von Fig. 1 ist die Situation erläutert, in der fünf von solchen Verteilerschleifenleitungen vorgesehen sind. Davon ist z.B. die Rede, wenn es fünf Stallräume gibt. Es ist jedoch auch denkbar, daß in **einem** Stallraum mehrere Verteilerschleifenleitungen vorgesehen sind, um zu vermeiden, daß die Länge einer Verteilerschleifenleitung zu groß wird, wodurch dann ein zu großer Druckabfall über diese Leitung entstehen würde, so daß der Motor 201 eine große Leistung haben muß. Es wird klar sein, daß die vorgesehene Anzahl der Verteilerschleifenleitungen von der örtlichen Situation abhängig ist und auf Wunsch vergrößert oder verkleinert werden kann. Da der Aufbau aller Verteilerschleifenleitungen identisch mit dem der besprochenen Verteilerschleifenleitung 211 sein kann, werden diese übrigen Verteilerschleifenleitungen nicht einzeln besprochen und sind sie in der Figur nicht mit Bezugsziffern versehen.

In vergleichbarer Weise wie besprochen in bezug auf den ersten Mischbehälter 20 hat der zweite Mischbehälter 30 einen Auslaß 36, an den eine zweite Hauptverteilerleitung 300 angeschlossen ist, in die eine Pumpe 301 aufgenommen ist. Diese Pumpe 301 ist ebenfalls vorzugsweise eine frequenzgesteuerte Verdrängerpumpe.

An die zweite Hauptverteilerleitung 300 ist eine zweite Verteilerschleifenleitung 311 über ein Einlaßventil 312 angeschlossen. Die zweite Verteilerschleifenleitung 311 ist weiter über ein Auslaßventil 313 an eine Rückleitung 314 angeschlossen, die in einen dritten Einlaß 37 des zweiten Mischbehälters 30 mündet.

Parallel zu der zweiten Verteilerschleifenleitung 311, unmittelbar hinter dem Einlaßventil 312 und unmittelbar vor dem Auslaßventil 313, ist eine Umlaufleitung 315 geschaltet, in die ein Ventil 316 aufgenommen ist.

Die zweite Verteilerschleifenleitung 311 erstreckt sich ebenfalls durch den genannten Stallraum und verläuft vorzugsweise parallel zu der ersten Verteilerschleifenleitung 211. Für jeden Trog 101 ist die zweite Verteilerschleifenleitung 311 mit einer Trogfülleitung 318 versehen, in die ein Trogventil 319 aufgenommen ist. Dieses Trogventil 319 kann ebenfalls ein Dopsierventil sein.

Die wichtigsten Vorteile dieses Systems werden durch die nachfolgende Beschreibung seiner Wirkung erläutert.

In einem ersten Schritt wird in dem ersten Mischbehälter 20 eine Futtersubstanz durch das Einbringen von vorgegebenen Mengen an Futterbestandteilen aus vorgegebenen Silos 41-48, vermischt mit Wasser aus dem Wassersilo 90, hergestellt. Dieses Futter in dem ersten Mischbehälter 20 wird als Futter A mit einer ersten Zusammensetzung bezeichnet. In vergleichbarer Weise wird in dem zweiten Mischbehälter 30 Futter B mit einer zweiten Zusammensetzung, die sich von der Zusammensetzung des Futters A unterscheidet, hergestellt.

Mit Hilfe der Pumpe 201 wird das Futter A in die erste Hauptverteilerleitung 200 und die erste(n) Verteilerschleifenleitung(en) 211 gepumpt. In vergleichbarer Weise wird mit Hilfe der Pumpe 301 Futter B in die zweite Hauptverteilerleitung 300 und die zweite(n) Verteilerschleifenleitung(en) 311 gepumpt.

Zum Füllen des Troges 101 öffnet das Bedienungspersonal das Trogventil 219 in der Trogfülleitung 218 der ersten Verteilerschleifenleitung 211 zum Einbringen einer ersten Menge an Futter A in den Trog 101. In vergleichbarer Weise öffnet das Bedienungspersonal das Trogventil 319 in der Trogfülleitung 318 der zweiten Verteilerschleifenleitung 311 zum Einbringen einer zweiten Menge an Futter B in den Trog 101. Beide Trogventile 219 und 319 können gleichzeitig geöffnet werden, aber sie können auch nacheinander in beliebiger Reihenfolge geöffnet werden. Das Futter in dem Trog 101 weist dann eine Gesamtzusammensetzung auf, die durch die Kombination der genannten ersten und zweiten Mengen, durch die Zusammensetzung des Futters A und durch die Zuammensetzung des Futters B bestimmt wird, wie dem Fachmann klar sein wird. Auf Wunsch wird das Futter in dem Trog 101 nach dem Einbringen noch einmal gut durcheinandergemischt (mit der Hand), aber im allgemeinen wird dies nicht notwendig sein.

Danach bringt das Bedienungspersonal in vergleichbarer Weise Futter in einen anderen Trog ein. Dabei kann die Zusammensetzung des Futters in diesem anderen Trog sich von dem Futter in dem genannten Trog 101 dadurch unterscheiden, daß einfach die erste und zweite Mengen anders gewählt werden. Dabei ist es nicht notwendig, daß die Zusammensetzung des Futters A oder B in den Mischbehältern 20, 30 geändert wird oder daß eine Verteilerleitung an einen anderen Mischbehälter angeschlossen wird.

Die Reihenfolge der zu füllenden Tröge ist eine ganz beliebige und kann dem Bedienungspersonal überlassen werden. Die Erfindung ermöglicht es jedoch, daß das Bedienungspersonal die Tröge in einer Reihenfolge füllt, die durch ihre räumliche Anordnung bestimmt wird, so daß das Personal die Tröge nacheinander, in **einer** Runde, füllen kann. Dies steht im Gegensatz zu den herkömmlichen Systemen, in denen das Personal zuerste eine Runde machen muß, um die mit einer ersten Zusammensetzung zu füllenden Tröge zu füllen, und danach eine zweite Runde machen muß, um die mit einer zweiten Zusammensetzung zu füllenden Tröge zu füllen, usw.

Da jederzeit das Futter in einer Verteilerleitung dieselbe Zusammensetzung beibehält (A oder B), auch wenn für jeden Trog eine andere Füllzusammensetzung gewünscht wird, tritt kein Futterverlust auf: alles Futter wird im Prinzip konsumiert. Dies steht im Gegensatz zu den herkömmlichen Systemen, in denen beim Umschalten auf eine andere Futterzusammensetzung Mischverluste entstehen, sowohl was Futter als auch was Zeit betrifft.

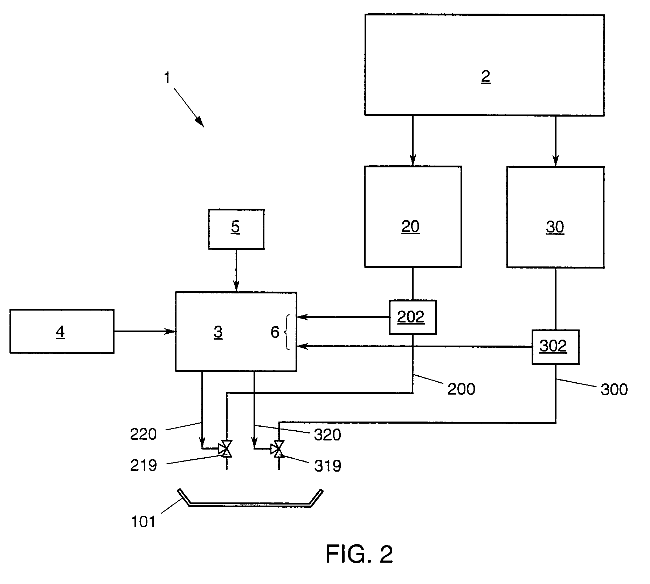

Im beschriebenen Beispiel werden die Trogventile 219, 319 örtlich (mit der Hand) betätigt. Es wird jedoch bevorzugt, daß die Trogventile 219, 319 alle fernsteuerbar sind und über eine Steuerleitung 220, 320 mit einer zentralen Steuereinheit 3, z.B. einem PC oder Mikroprozessor, verbunden sind, wie in Fig. 2 erläutert. Die zentrale Steuereinheit 3 ist dann vorzugsweise mit Meßorganen zum Messen der abgegebenen Futtermenge versehen. In einer möglichen Ausführungsform ist in jede Trogfülleitung 218, 318 ein Durchflußmeßfühler aufgenommen, der über eine Signalleitung mit einem Meßeingang der zentralen Steuereinheit gekoppelt ist. Dies könnte den Vorteil haben, daß mehrere Tröge gleichzeitig gefüllt werden können.

Es ist jedoch einfacher und billiger, das Messen der abgegebenen Futtermenge an einer zentralen Stelle durchzuführen und die Tröge nacheinander zu füllen. In einer möglichen Ausführungsform ist dazu ein Durchflußmeßfühler 202, 302 in die Hauptverteilerleitung 200, 300 aufgenommen, z.B. unmittelbar nach dem Auslaß 26, 36 oder in der Nähe der Pumpe 201, 301. Der Fühler 202, 302 ist über eine Signalleitung 203, 303 mit einem Signaleingang 6 der zentralen Steuereinheit 3 verbunden. Es ist auch möglich, den Ausfluß des Futters aus einem Mischbehälter 20, 30 dadurch zu messen, daß die Veränderung des Gewichtes des Futters in dem Mischbehälter 20, 30 oder die Veränderung des Druckes in der Substanz unten in dem Mischbehälter 20, 30 oder die Veränderung der Höhe des Flüssigkeitsspiegels in dem Mischbehälter 20, 30 gemessen wird.

In einer derartigen Ausführungsform kann das Bedienungspersonal die Tröge nacheinander füllen, indem es über ein Tastenfeld 4 Aufträge in die zentrale Steuereinheit 3 eingibt. Gemäß einem weiteren Aspekt der vorliegenden Erfindung ist es jedoch möglich, daß in einem mit der zentralen Steuereinheit 3 assoziierten Speicher 5 Daten bezüglich der Menge und Zusammensetzung des in jeden Trog 101 einzubringenden Futters gespeichert sind und daß die zentrale Steuereinheit 3 auf Basis dieser Daten das Füllen der Tröge selbsttätig durchführt. Diese Daten können jeden Tag mit der Hand vom Bedienungspersonal oder bereits mehrere Tage vorher eingegeben werden. Dabei ist es auch möglich, daß die zentrale Steuereinheit 3 das Füllen der Mischbehälter 20, 30 steuert, an passend gewählten Zeitpunkten zwischen den Futterperioden, auf Basis des gemessenen und des erwarteten Futterverbrauchs.

Es wird dem Fachmann klar sein, daß es möglich ist, die gezeigte Ausführungsform der erfindungsgemäßen Vorrichtung zu verändern oder zu modifizieren, ohne den Erfindungsgedanken oder den Schutzumfang zu verlassen. So ist es z.B. möglich, daß drei oder mehrere Mischbehälter vorgesehen sind, stets mit einem zugeordneten System aus Hauptverteilerleitung und Verteilerschleifenleitung, so daß in jeden Trog drei oder mehrere Trogfülleitungen münden.

Auch ist es möglich, daß es pro Mischbehälter nur **eine** Verteilerschleifenleitung gibt. In diesem Fall entfällt der Unterschied zwischen Verteilerschleifenleitung, Hauptverteilerleitung und Rückleitung und können die Ventile 212, 213 und 312, 313 entfallen.

Weiter ist es möglich, daß das Futter aus einer festen Substanz besteht. In einem derartigen Fall kann das Futter z.B. durch ein Förderband statt durch eine Leitung mit einer Pumpe befördert werden.

Weiter kann die Anzahl der Vorratstanks und/oder Vorratssilos größer oder kleiner sein, als in den Figuren gezeigt.

## Patentansprüche

**1.** Vorrichtung zum Abgeben von Futter an Tiere, umfassend: mindestens zwei Mischbehälter (20; 30);
mindestens einen Futtertrog (101); und
ein Futterverteilersystem (200, 211, 218) zum Füllen des Futtertroges (101) aus einem Mischbehälter (20);
**dadurch gekennzeichnet:**
daß für jeden Mischbehälter (20; 30) ein einzelnes Futterverteilersystem (200, 211, 218; 300, 311, 318) vorgesehen ist;
und daß jedes Futterverteilersystem (200, 211, 218; 300, 311, 318) eine Trogfülleitung (218; 318) für jeden Futtertrog (101) aufweist, welche Trogfülleitung (218; 318) jeweils ein in diese aufgenommenes Absperrorgan wie ein Ventil (219; 319) aufweist.

**2.** Vorrichtung nach Anspruch 1, wobei jedes einzelne Futterverteilersystem (200, 211, 218; 300, 311, 318) eine Hauptverteilerleitung (200; 300) aufweist, die bestimmt ist, kontinuierlich mit einem Auslaß (26; 36) des zugeordneten Mischbehälters (20; 30) gekuppelt zu bleiben.

**3.** Vorrichtung nach Anspruch 1 oder 2, wobei jedes einzelne Futterverteilersystem (200, 211, 218; 300, 311, 318) mindestens eine Verteilerschleifenleitung (211; 311) aufweist, von der ein Einlaß mit einer Hauptverteilerleitung (200; 300) gekuppelt ist.

**4.** Vorrichtung nach Anspruch 3, wobei am Einlaß der Verteilerschleifenleitung (211; 311) ein Ventil (212; 312) angeordnet ist.

**5.** Vorrichtung nach einem der Ansprüche 1-4, wobei jedes einzelne Futterverteilersystem (200, 211, 218; 300, 311, 318) mindestens eine Verteilerschleifenleitung (211; 311) aufweist, von der ein Auslaß mit einer Rückleitung (214; 314) zu einem dritten Einlaß (27; 37) des Mischbehälters (20; 30) gekuppelt ist.

**6.** Vorrichtung nach Anspruch 5, wobei am Auslaß der Verteilerschleifenleitung (211; 311) ein Ventil (213; 313) angeordnet ist.

**7.** Vorrichtung nach einem der Ansprüche 3-6, wobei eine Umlaufleitung (215; 315) , in die ein Ventil (216; 316) aufgenommen ist, parallel zu der Verteilerschleifenleitung (211; 311) geschaltet ist.

**8.** Vorrichtung nach einem der vorhergehenden Ansprüche, wobei jedes in eine Trogfülleitung (218; 318) aufgenommene Ventil (219; 319) fernsteuerbar ist.

**9.** Vorrichtung nach Anspruch 8, wobei jedes in eine Trogfülleitung (218; 318) aufgenommene Ventil (219; 319) über eine Steuerleitung (220; 320) mit einer zentralen Steuereinheit (3) gekoppelt ist.

**10.** Vorrichtung nach Anspruch 9, wobei Meßorgane (202, 302) zum Messen der abgegebenen Futtermenge vorgesehen sind, welche Meßorgane (202, 302) über eine Signalleitung (203, 303) mit einem Signaleingang (6) der zentralen Steuereinheit (3) gekoppelt sind und wobei die zentrale Steuereinheit (3) eingerichtet ist, das Öffnen und Schließen des in die Trogfülleitung (218; 318) aufgenommenen Ventils (219; 319) auf Basis u.a. der an seinem Signaleingang (6) empfangenen Signale zu steuern.

**11.** Vorrichtung nach Anspruch 10, wobei jede Trogfülleitung (218; 318) mit einem Durchflußmeßorgan versehen ist, das über eine Signalleitung mit dem Signaleingang (6) der zentralen Steuereinheit (3) gekoppelt ist.

**12.** Vorrichtung nach Anspruch 10, wobei in einen gemeinsamen Teil (200; 300) des Futterverteilersystems (200, 211, 218; 300, 311, 318) ein Durchflußmeßorgan (202, 302) aufgenommen ist, das über eine Signalleitung (203, 303) mit dem Signaleingang (6) der zentralen Steuereinheit (3) gekoppelt ist.

**12.** Vorrichtung nach Anspruch 10, wobei in den Mischbehälter (20; 30) ein Druckfühler aufgenommen ist, der über eine Signalleitung mit dem Signaleingang der zentralen Steuereinheit gekoppelt ist.

**13.** Vorrichtung nach Anspruch 10, wobei in den Mischbehälter (20; 30) ein Flüssigkeitsniveauhöhenmesser aufgenommen ist, der über eine Signalleitung mit dem Signaleingang der zentralen Steuereinheit gekoppelt ist.

**14.** Vorrichtung nach einem der Ansprüche 9-13, wobei die zentrale Steuereinheit (3) mit einem Speicher (5) versehen ist, in dem Daten pro Futtertrog (101) über die gewünschte Menge und Zusammensetzung des abzugebenden Futters gespeichert sind, und daß die zentrale Steuereinheit (3) eingerichtet ist, das Öffnen und Schließen der in die Trogfülleitungen (218; 318) aufgenommenen Ventile (219; 319) auf Basis u.a. der in diesem Speicher (5) gespeicherten Daten zu steuern, um die gewünschte Menge und Zusammensetzung des abzugebenden Futters zu erreichen.
